**Europäisches Patentamt**

**European Patent Office**

**Office européen des brevets**

(19)

(11) Numéro de publication: **0 295 159
B1**

(12)

# FASCICULE DE BREVET EUROPEEN

(45) Date de publication du fascicule du brevet:
**10.10.90**

(21) Numéro de dépôt: **88401155.2**

(22) Date de dépôt: **11.05.88**

(51) Int. Cl.⁵: **A47J 37/12, A47J 27/00**

(54) **Appareil de cuisson à chauffage électrique.**

(30) Priorité: **13.05.87 FR 8706728**

(43) Date de publication de la demande:
**14.12.88 Bulletin 88/50**

(45) Mention de la délivrance du brevet:
**10.10.90 Bulletin 90/41**

(84) Etats contractants désignés:
**AT BE CH DE ES GB GR IT LI NL SE**

(56) Documents cités:
**ES-U- 290 283
FR-A- 2 046 681
FR-A- 2 120 637
GB-A- 1 595 750
US-A- 2 863 037
US-A- 3 577 908
US-A- 3 725 641
US-A- 3 746 837
US-A- 4 138 606
US-A- 4 258 695**

(73) Titulaire: **SEB S.A., F-21260 Selongey(FR)**

(72) Inventeur: **Leiros, Ernest, 5 Rue Millotet,
F-21000 Dijon(FR)**

(74) Mandataire: **Bouju, André, Cabinet Bouju 38 avenue de
la Grande Armée, F-75017 Paris(FR)**

ACTORUM AG

## Description

La présente invention concerne une friteuse électrique munie d'une jupe en matière plastique, comportant une cuve en métal et une résistance électrique de chauffage.

Dans la plupart des friteuses électriques connues, la cuve en métal tel que de l'aluminium est directement exposée à l'air ambiant ce qui présente les inconvénients suivants:

– lors du fonctionnement de la friteuse, la cuve atteint facilement une température égale à 150°C, de sorte que les utilisateurs risquent de se brûler au contact de cette cuve,

– étant donné que la cuve est directement exposée à l'air, les déperditions de chaleur sont importantes ce qui est préjudiciable au rendement thermique et par conséquent la consommation en électricité.

– le métal nu de la cuve ne permet pas de conférer à la cuve un aspect esthétique particulièrement attrayant.

Quelques tentatives ont été effectuées pour essayer de surmonter les inconvénients précités.

Pour améliorer l'esthétique et réduire la température extérieure, il a déjà été envisagé d'entourer la cuve par une jupe métallique laquée.

Une autre tentative a consisté à entourer la cuve par une jupe en matière plastique. Toutefois, la fixation de cette cuve métallique à l'intérieur de cette jupe en matière plastique est telle qu'il existe entre cette cuve et la jupe de nombreux ponts thermiques. Du fait de ces nombreux ponts thermiques, la jupe est nécessairement réalisée en une matière plastique qui est capable de supporter en continu des températures supérieures à 150°C, telles que les polyamides et les polyesters. Ces matières plastiques présentent le grave désavantage d'être très onéreuses, de sorte qu'elles sont incompatibles avec la fabrication en grande série de friteuse bon marché.

On connaît d'autre part, selon le modèle d'utilité espagnol 290 283 publié le 16/11/1986 une friteuse électrique comportant une cuve en métal et une résistance électrique de chauffage, cette cuve étant destinée à être chauffée à au moins 150°C et étant entourée par une jupe en matière plastique telle que du polypropylène qui ne supporte pas en continu la température de la paroi de la cuve, cette jupe étant espacée de la paroi latérale et du fond de la cuve par une couche d'air. Cette jupe est complètement libre par rapport à la cuve à l'exception d'une liaison entre les bords supérieurs de cette jupe et de cette cuve.

Cette liaison est constituée par des ailettes métalliques solidaires d'une plaque métallique emboîté sur le bord supérieur de la jupe en matière plastique.

Des ouvertures sont pratiquées au fond de la jupe et dans les plaques métalliques situées en haut de la jupe pour créer une circulation d'air entre la jupe en matière plastique et la cuve métallique. Cette circulation d'air permet de refroidir la jupe en matière plastique.

Toutefois l'air sortant des ouvertures pratiquées dans les plaques métalliques situées en haut de la jupe est à une température élevée. Etant donné que ces ouvertures sont situées dans une zone susceptible d'être touchée par les utilisateurs, ceux-ci risquent d'être brûlés.

Le but de la présente invention est de créer une friteuse bon marché et qui en même temps protège efficacement les utilisateurs à l'égard des risques de brûlure et évite les déperditions de chaleur vers l'extérieur.

L'invention vise ainsi une friteuse électrique comportant une cuve en métal et une résistance électrique de chauffage, cette cuve atteignant facilement une température égale à 150°C et étant entourée par une jupe en matière plastique qui ne supporte pas en continu la température de la paroi de la cuve, cette jupe étant espacée de la paroi latérale et du fond de la cuve par une couche d'air, cette jupe étant complètement libre par rapport à la cuve à l'exception d'une liaison entre les bords supérieurs de cette jupe et de cette cuve.

Suivant l'invention, cette friteuse est caractérisée en ce que cette jupe entoure entièrement la paroi latérale et le fond de la cuve et en ce que ladite liaison s'effectue au moyen d'un anneau qui relie le bord supérieur de la jupe au bord supérieur de la cuve et ferme l'espace rempli d'air compris entre la jupe et la cuve, ladite couche d'air étant suffisamment épaisse pour limiter la température de la jupe à une valeur compatible avec la tenue thermique de la matière plastique de cette jupe, l'anneau étant en matière thermiquement isolante et résistant en continu à la température du bord supérieur de la cuve qui repose librement sur cet anneau.

Ainsi, la cuve est fixée à l'intérieur de la jupe d'une manière telle que le seul contact entre cette jupe et cette cuve se situe au niveau de l'anneau. Toutefois, étant donné que celui-ci est en matière thermiquement résistante et isolante, la jupe ne risque pas d'être portée à une température excessive.

Ainsi, la jupe peut être réalisée en une matière plastique de qualité inférieure, telle que le polypropylène qui ne supporte pas en continu une température supérieure à 80°C.

Etant donné que seul l'anneau est en matière noble, la réalisation de la friteuse équipée de sa jupe extérieure est peu coûteuse.

Par ailleurs, grâce à l'importante couche d'air comprise entre la cuve et la jupe en matière plastique, la déperdition de chaleur vers l'extérieur est très réduite, ce qui rend l'utilisation de l'appareil de cuisson particulièrement économique.

De plus, étant donné que la température de la jupe n'atteint pas une valeur excessive, les utilisateurs ne risquent pas de se brûler en touchant l'appareil. Ainsi, celui-ci peut être touché à tout moment, par exemple pour le déplacer, en cours de fonctionnement ou immédiatement après arrêt du chauffage.

Par ailleurs, la jupe en matière plastique peut être moulée sous toute forme esthétique réalisable désirée, ce qui rend l'appareil particulièrement attrayant.

Selon une version avantageuse de l'invention, le couvercle de l'appareil comprend une plaque métallique destinée à recouvrir de façon sensiblement étanche le bord supérieur de la cuve, cette plaque étant recouverte par un couvercle en matière plastique de même nature que celle de la jupe, ce couvercle étant espacé de la plaque métallique par une couche d'air, les liaisons entre celle-ci et le couvercle étant uniquement ponctuelles.

Ainsi, le couvercle est lui-même maintenu à une température basse et ne risque pas de brûler l'utilisateur. Ce couvercle, comme la jupe peut être réalisé en matière plastique bon marché.

Selon une version préférée de l'invention, l'anneau en matière thermiquement isolante comporte sur son bord adjacent au bord supérieur de la jupe en matière plastique, une gorge annulaire qui est engagée sur le bord supérieur de la jupe, le bord supérieur de la cuve présentant une collerette repliée de façon à définir une rainure ouverte vers le bas qui est engagée sur le bord adjacent de l'anneau.

Ainsi, la cuve est suspendue à cet anneau qui est lui-même emboîté sur le bord supérieur de la jupe, ce qui assure à la cuve une fixation sûre à l'intérieur de la jupe, sans aucun pont thermique autre que les contacts très réduits entre les bords de la cuve, de l'anneau et de la jupe.

D'autres particularités et avantages de l'invention apparaîtront encore dans la description ci-après.

Aux dessins annexés donnés à titre d'exemples non limitatifs :

- la figure 1 est une vue en coupe longitudinale d'une friteuse conforme à l'invention,
- la figure 2 est une vue à plus grande échelle du détail A de la figure 1,
- la figure 3 est une vue en élévation de la friteuse,
- la figure 4 est une vue en plan d'une poignée pour tenir le panier à friture de la friteuse.

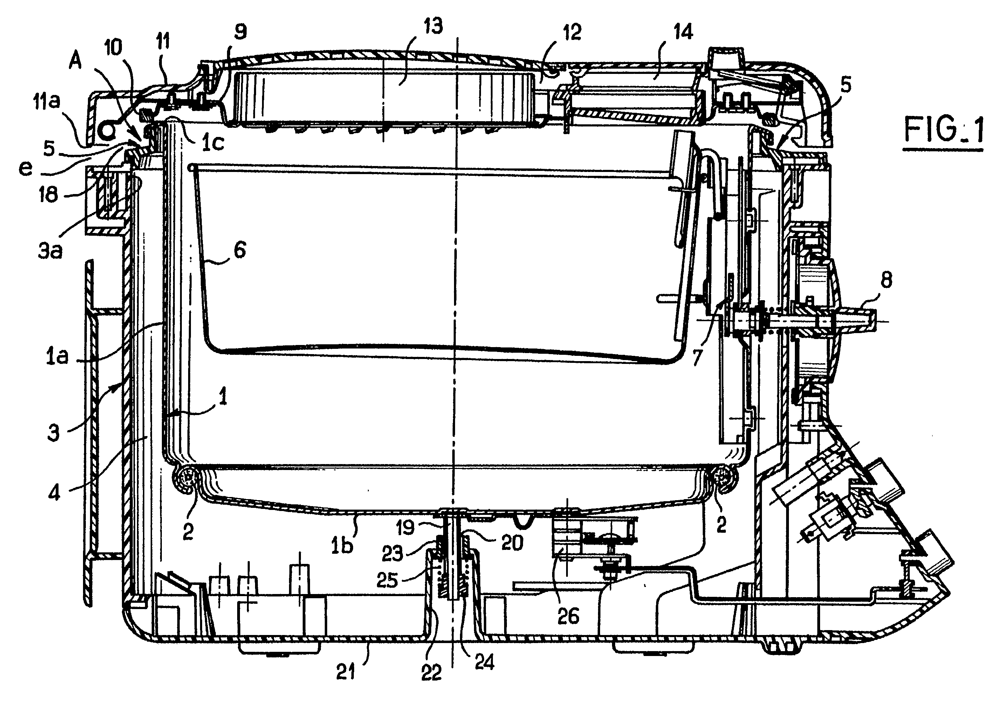

Dans la réalisation de la figure 1, la friteuse comporte essentiellement une cuve à huile 1 en métal et une résistance électrique de chauffage 2. Cette cuve 1 est entourée par une jupe 3 en matière plastique, telle le polypropylène qui ne supporte pas en continu la température de la paroi de la cuve 1.

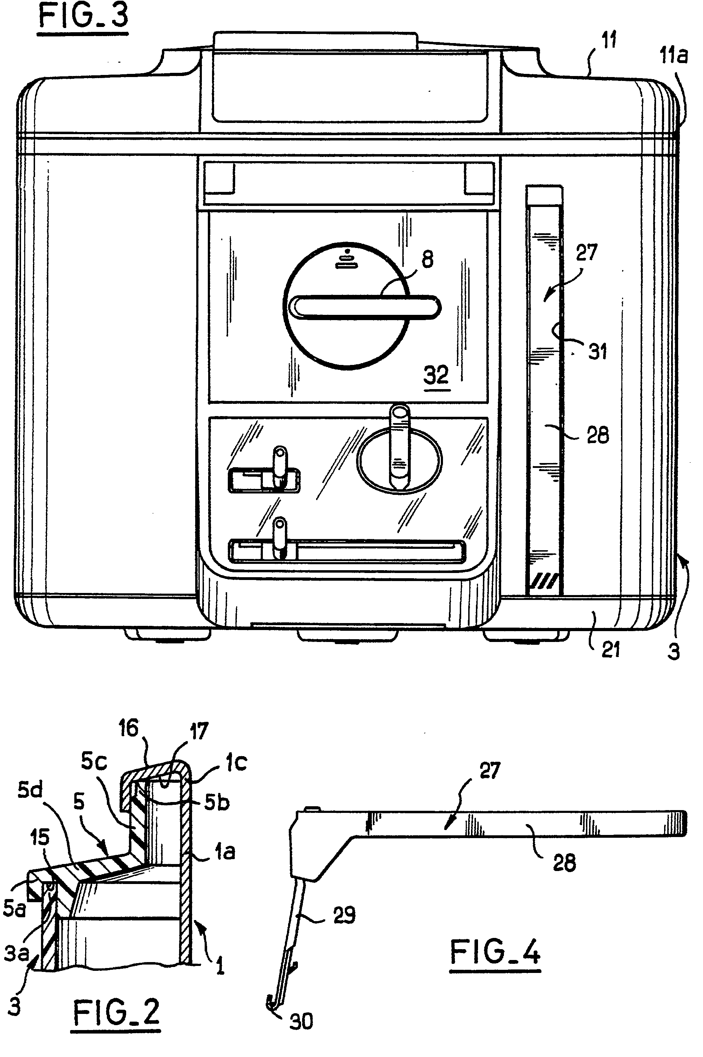

A l'intérieur de la cuve 1 est logé un panier à friture 6 qui peut être levé ou baissé au moyen d'un dispositif de monte et baisse 7 commandé de l'extérieur par un bouton rotatif 8 (voir également la figure 3).

La jupe 3 entoure entièrement la paroi latérale 1a et le fond 1b de la cuve 1 et est espacée de ces derniers par une couche d'air 4 suffisamment épaisse pour limiter la température de la jupe 3 à une valeur (par exemple inférieure à 80°C) compatible avec la tenue thermique de la matière plastique de cette jupe 3. De plus, cette jupe 3 est complètement libre par rapport à la cuve 1 à l'exception d'un anneau 5 qui relie le bord supérieur 3a de la jupe 3 au bord supérieur 1c de la cuve et auquel celle-ci est suspendue. Cet anneau 5 est en matière thermiquement isolante et résistant en continu à la température du bord supérieur 1c de la cuve 1. Cet anneau 5 peut être par exemple en polyamide ou en polyester.

Le couvercle de la friteuse comprend une plaque métallique 9 en forme de disque recouvrant de façon sensiblement étanche grâce à un joint annulaire 10 le bord supérieur 1c de la cuve 1. Cette plaque 9 est recouverte par un couvercle 11 en matière plastique de même nature que celle de la jupe 3. Ce couvercle 11 est espacé de la plaque métallique 9 par une couche d'air 12. Les liaisons entre cette plaque 9 et le couvercle 11 sont uniquement ponctuelles.

Entre la plaque métallique 9 et le couvercle 11 est disposé un filtre anti-odeur 13. A proximité de ce filtre 13 est situé un hublot 14 pour surveiller la friture.

Dans la réalisation représentée, l'anneau 5 en matière thermiquement isolante comporte (voir figure 2) sur son bord 5a adjacent au bord supérieur 3a de la jupe 3 en matière plastique, une gorge 15 annulaire qui est engagée sur le bord supérieur 3a de la jupe 3.

Par ailleurs, le bord supérieur 1c de la cuve présente une collerette 16 repliée de façon à définir une rainure 17 ouverte vers le bas qui est engagée sur le bord 5b adjacent de l'anneau 5.

Dans l'exemple représenté, l'anneau 5 a une section transversale sensiblement en L, l'une 5c des parties de ce L étant sensiblement parallèle à la paroi latérale 1a de la cuve 1 et espacée de celle-ci et l'autre partie 5d s'étendant radialement vers la jupe 3 en matière plastique.

D'autre part, lorsque le couvercle 11 est fermé, le bord inférieur 11a de celui-ci est espacé du bord supérieur 3a de la jupe 3 par un jeu e suffisant pour permettre à l'espace annulaire 18 entourant l'anneau 5 de communiquer avec l'air extérieur. Ainsi, l'anneau 5 est refroidi par l'air ambiant et ne risque pas d'être porté à une température excessive.

Le fond 1b de la cuve 1 comporte une tige verticale 19 engagée dans une ouverture 20 ménagée dans un renfoncement 22 du fond 21 de la jupe extérieure. Cette ouverture 20 est séparée de la tige 19 par un manchon 23 en matière thermiquement isolante et résistant à la température, telle que du polyamide. L'extrémité de cette tige 19 est munie d'un écrou 24 ou analogue serré contre un ressort 25 en appui contre le bord de l'ouverture 20 opposé à la cuve 1. Cette disposition permet de compenser les tolérances de fabrication ainsi que les variations dimensionnelles dues à la dilatation thermique.

On voit de plus sur la figure 1 que la résistance électrique de chauffage 2 est sertie dans le fond 1b de la cuve 1 et est suffisamment éloignée du fond 21 et de la paroi latérale de la jupe 3 pour éviter tout échauffement excessif de celle-ci.

Au fond 1b de la cuve 1 est fixé un thermostat 26 qui est lui-même espacé du fond 21 de la jupe 3 en matière plastique pour éviter tout pont thermique susceptible d'échauffer excessivement cette matière plastique.

La friteuse selon l'invention comprend une poignée 27 pour tenir le panier à friture 6 (voir figure 4). Cette poignée 27 comporte un manche 28 à l'extrémité duquel est fixée une patte 29 munie d'un crochet 30.

Comme on le voit sur la figure 3, la jupe 3 présente sur sa face latérale une fente verticale 31 dans laquelle est encastrée de façon amovible l'ensemble de la poignée 27. Cette disposition est rendue possible grâce à la distance relativement importante (3 à 5 cm) qui sépare la cuve 1 de la zone de raccordement de la partie cylindrique de la jupe 3 à la partie plane 32 qui entoure le bouton de commande 8.

Les principaux avantages de la friteuse que l'on vient de décrire sont les suivants :
La jupe extérieure 3 en matière plastique séparée de la cuve à huile 1 permet d'isoler cette dernière et d'éviter tout risque de brûlure à l'utilisateur. En même temps l'espace d'air 4 qui entoure la cuve 1 limite considérablement les déperditions de chaleur vers l'extérieur, ce qui permet une diminution de la consommation d'électricité.

De plus, étant donné que la jupe 3 est pratiquement libre par rapport à la cuve 1, c'est-à-dire qu'aucun pont thermique n'est crée entre cette cuve et la iupe, celle-ci peut être réalisée en matière plastique de qualité courante bon marché qui ne résiste pas à de fortes températures, ce qui permet une fabrication de la friteuse à faible coût.

La seule partie relativement onéreuse de la friteuse est constituée par l'anneau 5 qui doit être en matière noble résistant à la température. Toutefois, l'incidence de cet anneau sur le coût de la friteuse est faible, compte tenu des dimensions réduites de cette pièce.

Le mérite de la présente invention réside en particulier dans le fait d'avoir trouvé dans cet anneau de conception simple une solution efficace au problème posé. Cet anneau réalise à lui seul toutes les fonctions suivantes:

— il définit l' espacement entre la cuve 1 et la jupe extérieure 3 en matière plastique,
— il sert à supporter et à centrer la cuve 1 à l' intérieur de la jupe 3 – il obture complètement l'espace d'air compris entre la cuve 1 et la jupe 3,
— il permet à la cuve 1 de se dilater librement par rapport à la jupe 3,
— il permet de limiter la transmission de la chaleur entre la cuve 1 et la jupe 3.

Par ailleurs, la jupe extérieure 3 en matière plastique moulée, ainsi que le couvercle 11 réalisé dans la même matière confère à la friteuse une esthétique tout à fait nouvelle. Cette esthétique est due notamment au fait que les organes de commande de la friteuse ainsi que la poignée 27 du panier à friture s'intègrent remarquablement bien dans cette jupe, comme le montre la figure 3.

La jupe, le couvercle 11 et l'anneau 5 peuvent être réalisés en des matières plastiques autres que celles données à titre d'exemples dans la description ci-dessus.

## Revendications

1. Friteuse électrique comportant une cuve (1) en métal et une résistance électrique de chauffage (2), cette cuve atteignant, une température égale à 150°C et étant entourée par une jupe (3) en matière plastique qui ne supporte pas en continu la température de la paroi (1a, 1b) de la cuve, cette jupe (3) étant espacée de la paroi latérale et du fond de la cuve par une couche d'air (4), cette jupe (3) étant complètement libre par rapport à la cuve (1) à l'exception d'une liaison entre les bords supérieurs de cette jupe et de cette cuve, caractérisée en ce que ladite liaison s'effectue au moyen d' anneau (5) qui relie le bord supérieur de la jupe (3) au bord supérieur de la cuve (1) et ferme l'espace rempli d'air (4) compris entre la jupe et la cuve, ladite couche d'air (4) étant suffisamment épaisse pour limiter à la température de la jupe à une valeur compatible avec la tenue thermique de la matière plastique de cette jupe (3), d'un anneau (5) étant en matière thermiquement isolante et résistant en continu à la température du bord supérieur (1c) de la cuve (1) qui repose librement sur cet anneau (5).

2. Appareil conforme à la revendication 1, le couvercle de celle--ci comprenant une plaque métallique (9) destinée à recouvrir de façon sensiblement étanche le bord supérieur (1c) de la cuve (1), caractérisé en ce que cette plaque (9) est recouverte par un couvercle (11) en matière plastique de même nature que celle de la jupe (3), ce couvercle (11) étant espacé de la plaque métallique (9) par une couche d'air (12), les liaisons entre cette plaque (9) et le couvercle (11) étant uniquement ponctuelles.

3. Appareil conforme à l'une des revendications 1 ou 2, caractéirsé en ce que la cuve (1) est suspendue à l'anneau (5).

4. Appareil conforme à l'une des revendications 1 à 3, caractérisé en ce que l'anneau (5) en matière thermiquement isolante comporte sur son bord (5a) adjacent au bord supérieur (3a) de la jupe (3) en matière plastique, une gorge (15) annulaire qui est engagée sur le bord supérieur (3a) de la jupe (3).

5. Appareil conforme à l'une des revendications 1 à 4, caractérisé en ce que le bord supérieur (1c) de la cuve (1) présente une collerette (16) repliée de façon à définir une rainure (17) ouverte vers le bas qui est engagée sur le bord (5b) adjacent de l'anneau (5).

6. Appareil conforme à l'une des revendications 1 à 5, caractérisé en ce que l'anneau (5) a une section transversale sensiblement en L, l'une (5c) des parties de ce L étant sensiblement parallèle à la paroi latérale (1a) de la cuve (1) et espacée de celle-ci et l'autre partie (5d) s'étendant radialement vers la jupe (3) en matière plastique.

7. Appareil conforme à l'une des revendications 2 à 6, caractérisé en ce que lorsque le couvercle (11) est fermé, le bord inférieur (11a) de celui-ci est espacé du bord supérieur (3a) de la jupe par un jeu (e) suffisant pour permettre à l'espace annulaire (18) entourant l'anneau (5) de communiquer avec l'air extérieur.

8. Appareil conforme à l'une des revendications 1 à 7, caractérisé en ce que le fond (1b) de la cuve (1) comporte une tige verticale (19) engagée dans une ouverture (20) ménagée dans le fond (21) de la jupe extérieure (3) et séparée de la tige (19) par un manchon (23) en matière thermiquement isolante et résistant à la température de cette tige, l'extrémité de cette tige (19) étant munie d'un écrou (24) ou analogue serré contre un ressort (25) en appui contre le bord de l'ouverture (20) opposé à la cuve (1).

9. Appareil conforme à l'une des revendications 2 à 8, caractérisé en ce que la jupe (3) et le couvercle (11) sont en polypropylène.

10. Appareil conforme à l'une des revendications 1 à 9, caractérisé en ce que l'anneau (5) est en polyamide ou en polyester.

11. Appareil conforme à l'une des revendications 1 à 10, comprenant une poignée (27) pour tenir le panier à friture (6), caractérisé en ce que la jupe (3) présente sur sa face latérale une fente verticale (31) dans laquelle est encastrée de façon amovible l'ensemble de la poignée (27).

## Patentansprüche

1. Elektrisches Fritiergerät mit einem Behälter (1) aus Metall und einem elektrischen Heizwiderstand (2), wobei dieser Behälter leicht eine Temperatur von 150°C erreicht und von einer Schürze (3) aus nicht ständig der Temperatur der Wand (1a, 1b) des Behälters standhaltenden Kunststoff umgeben ist, wobei diese Schürze (3) von der Seitenwand und dem Boden des Behälters durch eine Luftschicht (4) getrennt und in bezug auf den Behälter (1) mit Ausnahme einer Verbindung zwischen den oberen Rändern dieser Schürze und dieses Behälters völlig frei ist, dadurch gekennzeichnet, daß diese Schürze die Seitenwand und den Boden des Behälters vollständig umgibt und daß die genannte Verbindung mittels eines Ringes (5) bewerkstelligt ist, der den oberen Rand der Schürze (3) mit dem oberen Rand des Behälters (1) verbindet und den mit Luft (4) gefüllten Raum zwischen der Schürze und dem Behälter verschließt , wobei die genannte Luftschicht (4) genügend dick ist, um die Temperatur der Schürze auf einen mit dem Wärmeverhalten des Kunststoffs dieser Schürze (3) kompatiblen Wert zu begrenzen, und wobei der Ring (5) aus einem wärmeisolierenden und der Temperatur des frei auf diesem Ring (5) aufruhenden oberen Randes (1c) des Behälters (1) dauernd standhaltenden Material besteht.

2. Gerät nach Anspruch 1, dessen Deckel eine Metallplatte (9) umfaßt, die dazu bestimmt ist, den oberen Rand (1c) des Behälters (1) im wesentlichen dicht abzudecken, dadurch gekennzeichnet, daß diese Platte (9) mit einem Deckel (11) aus Kunststoff der gleichen Art wie jener der Schürze (3) überdeckt ist, wobei dieser Deckel (11) von der Metallplatte (9) durch eine Luftschicht (12) getrennt ist und die Verbindungen zwischen dieser Platte (9) und dem Deckel (11) lediglich punktförmig sind.

3. Gerät nach Anspruch 1 oder 2, dadurch gekennzeichnet, daß der Behälter (1) an dem Ring (5) aufgehängt ist.

4. Gerät nach einem der Ansprüche 1 bis 3, dadurch gekennzeichnet, daß der Ring (5) aus wärmeisolierendem Material an seinem dem oberen Rand (3a) der Schürze (3) aus Kunststoff benachbarten Rand (5a) eine Ringnut (15) aufweist, die den oberen Rand (3a) der Schürze (3) übergreift.

5. Gerät nach einem der Ansprüche 1 bis 4, dadurch gekennzeichnet, daß der obere Rand (1c) des Behälters (1) einen derart umgebördelten Flansch (16) aufweist, daß letzterer eine nach unten offene Nut (17) bildet, die den benachbarten Rand (5b) des Ringes (5) übergreift.

6. Gerät nach einem der Ansprüche 1 bis 5, dadurch gekennzeichnet, daß der Ring (5) einen im wesentlichen L-förmigen Querschnitt besitzt, wobei einer (5c) der Abschnitte dieses L im wesentlichen parallel zur Seitenwand (1a) des Behälters (1) verläuft und von dieser beabstandet ist und der andere Abschnitt (5d) sich radial zur Schürze (3) aus Kunststoff hin erstreckt.

7. Gerät nach einem der Ansprüche 2 bis 6, dadurch gekennzeichnet, daß bei geschlossenem Deckel (11) der untere Rand (11a) desselben von dem oberen Rand (3a) der Schürze durch ein Spiel(e) getrennt ist, das ausreicht, um den den Ring (5) umgebenden Ringraum (18) mit der Außenluft zu verbinden.

8. Gerät nach einem der Ansprüche 1 bis 7, dadurch gekennzeichnet, daß der Boden (1b) des Behälters (1) einen vertikalen Stift (19) besitzt, der in eine im Boden (21) der äußeren Schürze (3) ausgesparte Öffnung (20) eingesetzt ist, die von dem Stift (19) durch eine Hülse (23) aus wärmeisolierendem und gegenüber der Temperatur dieses Stifts beständigem Material getrennt ist, wobei das Ende dieses Stifts (19) mit einer Mutter (24) od.dgl. versehen ist, welche gegen eine sich an dem dem Behälter (1) gegenüberliegenden Rand der Öffnung (20) abstützende Feder (25) drückt.

9. Gerät nach einem der Ansprüche 2 bis 8, dadurch gekennzeichnet, daß die Schürze (3) und der Deckel (11) aus Polypropylen bestehen.

10. Gerät nach einem der Ansprüche 1 bis 9, dadurch gekennzeichnet, daß der Ring (5) aus Polyamid oder Polyester besteht.

11. Gerät nach einem der Ansprüche 1 bis 10, mit einem Handgriff (27) zum Halten des Fritierkorbes (6), dadurch gekennzeichnet, daß die Schürze (3) in ihrer Seitenwand einen vertikalen Schlitz (31) aufweist, in den der gesamte Handgriff (27) lösbar eingefügt ist.

## Claims

1. An electric fryer comprising a metal vessel (1) and an electrical heating resistance (2), the vessel (1) readily reaching a temperature of 150°C and being surrounded by a plastics skirt (3) which does not continuously withstand the temperature of the vessel wall (1a, 1b), said skirt (3) being spaced from the side wall and base of the vessel by a layer of air (4), said skirt (3) being completely free with respect to the vessel (1) except for a connection between the top edge of the skirt and the top edge of the vessel, characterised in that said skirt completely surrounds the side wall and the base of the vessel and in that the connection is made by means of a ring (5) which connect the top edge of the skirt (3) to the top edge of the vessel (1) and closes the air-filled space (4) between the skirt and the vessel, said layer of air (4) being thick enough to limit the skirt temperature to a value compatible with the thermal characteristic of the plastics material of said skirt (3), said ring (5) being of a thermally insulating material which is continuously resistant to the temperature of the top edge (1c) of the vessel (1) which rests freely on said ring (5).

2. An appliance according to claim 1, in which the lid comprises a metal plate (9) adapted to cover the top edge (1c) of the vessel (1) in substantially sealing-tight manner, characterised in that said plate (9) is covered by a lid (11) of plastics of the same type as that of the skirt (3), said lid (11) being spaced from the metal plate (9) by a layer of air (12), the connections between the plate (9) and the lid (11) being solely spot connections.

3. An appliance according to claim 1 or 2, characterised in that the vessel (1) is suspended from the ring (5).

4. An appliance according to any one of claims 1 to 3, characterised in that the edge (5a) of the thermally insulating ring (5) which is adjacent the top edge (3a) of the plastics skirt (3) has an annular groove (15) which is engaged on the top edge (3a) of the skirt (3).

5. An appliance according to any one of claims 1 to 4, characterised In that the top edge (1c) of the vessel (1) has a collar (16) so bent as to define a downwardly open groove (17) which is engaged on the adjacent edge (5b) of the ring (5).

6. An appliance according to any one of claims 1 to 5, characterised in that the ring (5) has a substantially L-shaped cross-section, one (5c) of the parts of the L being substantially parallel to the side wall (1a) of the vessel (1) and spaced therefrom and the other part (5d) extending radially towards the plastics skirt (3).

7. An appliance according to any one of claims 2 to 6, characterised in that when the lid (11) is closed its bottom edge (11a) is spaced from the top edge (3a) of the skirt by a clearance (e) sufficient to allow the annular space (18) surrounding the ring (5) to communicate with the extern air.

8. An appliance according to any one of claims 1 to 7, characterised in that the base (1b) of the vessel (1) comprises a vertical rod (19) engaged in an aperture (20) formed in the base (21) of the outer skirt (3) and separated from the rod (19) by a thermally insulating sleeve (23) resistant to the temperature of said rod, the end of said rod (19) being provided with a nut (24) or the like clamped against a spring (25) bearing against the edge of the aperture (20) remote from the vessel (1).

9. An appliance according to any one of claims 2 to 8, characterised in that the skirt (3) and the lid (11) are made of polypropylene.

10. An appliance according to any one of claims 1 to 9, characterised in that the ring (5) is made of polyamide or polyester.

11. An appliance according to any one of claims 1 to 10, comprising a handle (27) for holding the frying basket (6), characterised in that the side surface of the skirt (3) is formed with a vertical slot (31) in which the handle assembly (27) is removably housed.

FIG.1

FIG.3

11  11a

8

32

27

31

28

21  3

16  17

5c  1c

5d  5  5b

15  1a

5  5

5a  27

3a  28

3  1  29

FIG.2  30  FIG.4

1